Europäisches Patentamt

European Patent Office

Office européen des brevets

(11) Publication number: **0 217 235 B1**

# EUROPEAN PATENT SPECIFICATION

(45) Date of publication of patent specification: **10.07.91**  (51) Int. Cl.⁵: **F04D 13/02, H02K 7/11**

(21) Application number: **86112881.7**

(22) Date of filing: **18.09.86**

(54) **Electric pump of the magnetic drive transmission type.**

(30) Priority: **20.09.85 IT 4574285**

(43) Date of publication of application:
**08.04.87 Bulletin 87/15**

(45) Publication of the grant of the patent:
**10.07.91 Bulletin 91/28**

(84) Designated Contracting States:
**AT BE CH DE FR GB IT LI LU NL SE**

(56) References cited:
**DE-A- 1 728 405**
**US-A- 2 951 447**
**US-A- 3 172 364**
**US-A- 3 198 125**

(73) Proprietor: **SOLE S.p.A.**
**Via Giardini Cattaneo 3**
**I-33170 Pordenone(IT)**

(72) Inventor: **Rossi, Luigi**
**Via S. Murialdo 11/4**
**I-31046 Oderzo Treviso(IT)**

(74) Representative: **Patentanwälte Grünecker,**
**Kinkeldey, Stockmair & Partner**
**Maximilianstrasse 58**
**W-8000 München 22(DE)**

## Description

The invention relates to an electrically driven pump of the magnetic drive transmission type as set forth in the preamble of claim 1. A pump of this type is known from US-A-3 172 364.

In this document, a hydraulic fluid pump is disclosed which is driven by a belt and pulley transmission by a motor which is separate from the pump. In order to comply with rotary sealing problems, torque is transmitted from the pulley outside the pump housing to the pump rotor inside the pump housing via a magnetic clutch the elements of which are disposed on either side of a separation wall penetrated by a common fixed shaft rotatably mounting the magnetic clutch elements and the pump rotor and pulley, respectively, connected therewith.

From DE-A-1 728 405 an electrically driven hydraulic fluid pump is known in which the stator of the electric motor is separated from the rotor thereof by a separation wall. This electric pump has one rotor only, wherein the rotor of the motor is at the same time the pump rotor. This motor is an asynchronous motor producing an axial magnetic flux through the separation wall so that the efficiency is rather poor, which is very important when one considers that such a pump is particularly adapted for use in laundry washing machines and dishwashers where the pump has to treat dirty water which evenutally also contains solid objects which may block the pump veins. In such instances, relative slipping of the motor is a prerequisite. However, in contrast thereto, the known motor may overheat and burn when the rotor is blocked.

It is the object of the invention to provide a pump as set forth above which is compact, economical and of a fully automated construction and at the same time protected against overheating of its motor.

This object is attained by the characterizing features of claim 1. Preferred embodiments of the invention are the subject matter of the dependent claims.

The characteristics of the invention will become evident from the following description, given by way of example with reference to the accompanying drawings, wherein:

fig. 1    shows a sectional view of an electric pump according to the invention, and

fig. 2    shows a modified structural detail of the electric pump shown in fig. 1.

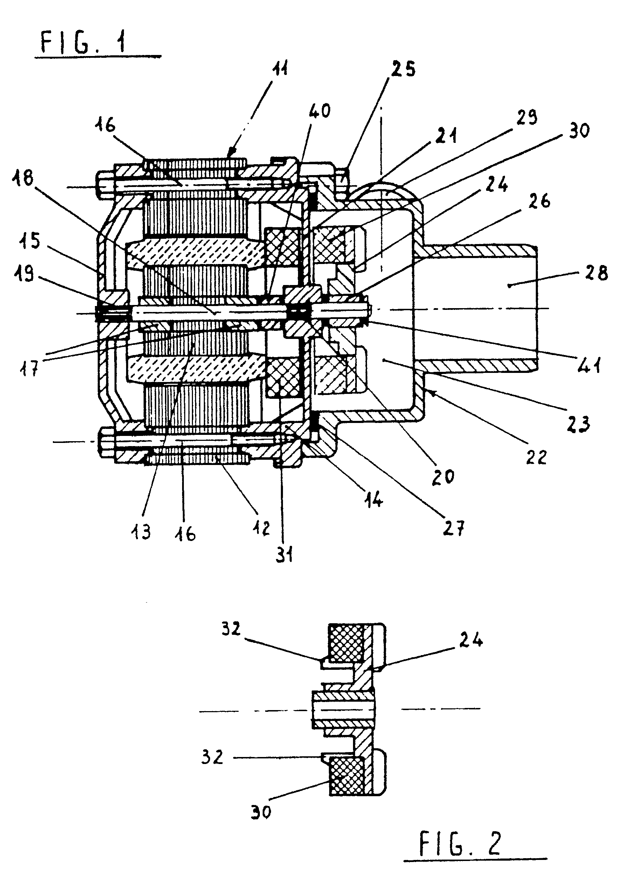

The electric pump shown in fig. 1 comprises an electric motor 11 having a stator 12 and a rotor 13 rotatably mounted therein. Stator 12 and rotor 14 are enclosed between a cover 14 and a clamping flange 15 by means of tension bolts 16.

Rotor 13 is rotatably mounted by means of bearings 17 on a fixed shaft 18 having one end press-fitted into a seat 19 formed in flange 15 and being further supported in a seat 20 formed in a wall 21 of cover 14. A spacer 40 slipped onto shaft 18 between rotor 13 and seat 21 serves for absorbing or eliminating axial play during assembly and in operation.

Associated to motor 11 is a centrifugal pump 22 the chamber 23 of which, containing a pump rotor 24, is secured by means of bolts 25 to cover 14 of motor 11. Rotor 24 is rotatably mounted by means of a bearing 26 on the end portion of shaft 18 projecting through cover 18 and retained thereon by a retaining ring 41.

A static sealing gasket 27 ensures the sealed connection of pump chamber 23 to motor cover 14. Pump chamber 23 has an axial inlet 28 and a tangential outlet 29 for the circulation of a liquid. Secured to pump rotor 24, for instance by adhesive bonding, at its side facing towards wall 21 of cover 14 is a first magnetic crown 30.

In a similar manner, a second magnetic crown 31 is secured as by adhesive bonding to the side of motor rotor 13 facing towards wall 21 of cover 14. The two magnetic crowns 30 and 31 thus face one another from opposite sides of wall 21, which has to be permeable to the magnetic flux for permitting pump rotor 24 to be entrained in rotation by motor rotor 13 through the magnetic coupling between crowns 30 and 31.

Cover 14 with wall 21 and seat 20 is advantageously formed as an integral member of a plastic material, as is also flange 15.

Fig. 2 shows a preferable embodiment of pump rotor 24 permitting magnetic crown 30 to be secured thereto in a snap fit instead of by adhesive bonding, as in fig. 1. In this embodiment, pump rotor 24 is formed of a plastic material and integrally provided on the side facing towards wall 21 separating it from motor 11 with at least two flexible clamping fingers 32. This permits magnetic crown 30 to be secured to pump rotor 24 by snap engagement of clamping fingers 32 so as to obtain a pre-assembled component which renders the construction of the electric pump as a whole still more advantageous.

The manufacturing process of the electric pump may in fact be readily automatized by reducing it to the assembly of prefabricated subassemblies. Rotor 13 with magnetic crown 31 secured thereto is slipped onto shaft 18 previously secured in cover 14. The thus formed subassembly is inserted into stator 12 which is then closed by securing flange 15 thereto. Subsequently pump rotor 24 with magnetic crown 30 secured thereto is mounted on shaft 18, whereupon the assembly is finished by mounting pump housing 22.

The electric pump according to the invention thus presents characteristics resulting in considerable economic adavantages, whereby the pump is ideally suited for employ in electrical domestic appliances such as laundry washing machines or dishwashers.

In appliances of this type, the amounts of liquids to be pumped and the required flow rates are relatively limited. In experiments it has been found that the described electric pump is capable of delivering the required performance even with a pump rotor having a reduced number of blades of extremely reduced dimensions.

When the described pump is to be employed for other applications, the pump rotor may be replaced by a rotor having other dimensions and a different number of blades, while maintaining all of the structural characteristics and advantages of the described solution as claimed.

## Claims

1. An electrically driven pump of the magnetic drive transmission type, comprising a cover (14) with a separation wall (21) and a seat (20) formed as integral member, a pump rotor (24) provided with a first magnetic crown (30), a second magnetic crown (31) mounted to a drive rotor (13) and rotationally driven by an electric motor (11), said pump rotor (24) being rotationally mounted by a bearing (26) on a common fixed shaft (18) with said magnetic crowns (30,31) facing one another from opposite sides of said separation wall (21) permeable to the magnetic flux and passed by said fixed shaft (18) in said press-fit seat (20), said separation wall (21) forming one end wall of a pump chamber (23) accommodating said pump rotor (24), characterized in that said drive rotor (13) is the rotor of the electric motor (11), said motor (11) being fixed to said separation wall (21) by means of tension bolts (16) fixing also a clamping flange (15) supporting one end of said common shaft (18) to said cover (14), said drive rotor (13) being mounted on said common shaft (18) by bearings (17).

2. A pump according to claim 1, characterized in that said bearings (17, 26) are made of a self-lubricating plastic material and disposed interiorly of the respective rotor in the axial direction.

3. A pump according to claim 1, characterized in that said magnetic crowns (30, 31) are adhesively secured respectively to said electric rotor (13) and to said pump rotor (24).

4. A pump according to claim 1, in which said pump rotor (24) is made of a plastic material, characterized in that said pump rotor (24) is integrally formed with at least two flexible clamping fingers (32) for the automatic alignment and retention of the respective magnetic crown (30).

## Revendications

1. Pompe électrique du type à accouplement magnétique, comprenant un couvercle (14) avec une paroi de séparation (21) et un siège (20) formésen tant qu'élément d'un seul tenant, un rotor de pompe (24) équipé d'une première couronne magnétique (30), une deuxième couronne magnétique (31) montée sur un rotor d'entraînement (13) et entraînée en rotation par un moteur électrique (11), le rotor de pompe (24) étant monté à rotation au moyen d'un palier (26) sur un arbre commun fixe (18) avec les couronnes magnétiques (30,31) en vis-à-vis l'une de l'autre depuis les côtés opposés de la paroi de séparation (21) perméable au flux magnétique et traversée par cet arbre fixe (18) dans le siège enfoncé sous pression (20), la paroi de séparation (21) formant une paroi terminale d'une chambre de pompe (23) recevant le moteur de pompe (24), caractérisée en ce que le rotor d'entraînement (13) est le rotor du moteur électrique (11), ce moteur (11) étant fixé sur la paroi de séparation (21) au moyen de boulons de traction (16) fixant également un flasque de bridage (15) supportant une extrémité de l'arbre commun (18) sur le couvercle (14), le rotor d'entraînement (13) étant monté sur l'arbre commun (18) au moyen de paliers (17).

2. Pompe selon la revendication 1, caractérisée en ce que les paliers (17,26) sont en une matière plastique autolubrifiante et sont disposées à l'intérieur du rotor respectif dans la direction axiale.

3. Pompe selon la revendication 1, caractérisée en ce que les couronnes magnétiques (30,31) sont fixées par collage respectivement sur le rotor (13) du moteur électrique et sur le rotor de pompe (24).

4. Pompe selon la revendication 1, dans laquelle le rotor de pompe (24) est en matière plastique, caractérisée en ce que ce rotor de pompe (24) comporte d'un seul tenant au moins deux doigts de bridage flexibles (32) pour l'alignement automatique et la retenue de la couronne magnétique correspondante (30).

**Ansprüche**

1. Eine elektrische Pumpe mit magnetischer Kupplung, die eine Abdeckung (14) mit einer Trennwand (21) und einem als integralen Bestandteil gebildeten Auflager (20) aufweist, mit einem Pumpenrotor (24), der ein erstes magnetisches Kreuz (30) aufweist, mit einem zweiten magnetischen Kreuz (31), das an einem Antriebsrotor (13) befestigt ist und durch einen elektrischen Motor (11) angetrieben ist, wobei der Pumpenrotor (24) mittels eines Auflagers (26) auf einer mit den magnetischen Kreuzen (30, 31) gemeinsamen, fixierten Welle (18) befestigt ist, wobei die magnetischen Kreuze sich von gegenüberliegenden Seiten der Trennwand (21) gegenüber stehen und die Trennwand für den magnetischen Fluß permeabel ist und die in dem Auflager (20) durch Pressen eingepaßte, fixierte Welle (18) durch diese Wand durchgeführt ist, wobei weiterhin die Trennwand (21) eine Endwand einer den Pumpenrotor (24) aufnehmenden Pumpenkammer (23) bildet, **dadurch gekennzeichnet,** daß der Antriebsrotor (13) der Rotor des elektrischen Motors (11) ist, der Motor (11) an der Trennwand (21) durch Zugbolzen (16) befestigt ist, die auch einen Spannflansch (15) fixieren, der ein Ende der geminsamen Welle (18) gegenüber der Abdeckung (14) hält, und daß der Antriebsrotor (13) auf der gemeinsamen Welle (18) in Auflagern (17) angeordnet ist.

2. Die Pumpe nach Anspruch 1, **dadurch gekennzeichnet,** daß die Auflager (17, 26) aus einem selbstschmierenden Kunststoffmaterial hergestellt und in axialer Richtung auf der Innenseite der entsprechenden Rotoren angeordnet sind.

3. Eine Pumpe nach Anspruch 1, **dadurch gekennzeichnet,** daß die magnetischen Kreuze (30, 31) mit dem entsprechenden elektrischen Rotor (13) und dem Pumpenrotor (24) durch Kleben verbunden sind.

4. Eine Pumpe nach Anspruch 1, wobei der Pumpenrotor (24) aus einem Kunststoffmaterial hergestellt ist, **dadurch gekennzeichnet,** daß der Pumpenrotor (24) wenigstens zwei integriert ausgebildete, flexible Haltefinger (32) zur automatischen Ausrichtung und zum Festhalten der entsprechenden magnetischen Kreuze (30) aufweist.

FIG. 1

FIG. 2